(19) Europäisches Patentamt
European Patent Office
Office européen des brevets

(11) Publication number: **0 171 826**
**B1**

(12) # EUROPEAN PATENT SPECIFICATION

(45) Date of publication of patent specification: **28.12.88**

(21) Application number: **85200863.0**

(22) Date of filing: **30.05.85**

(51) Int. Cl.[4]: **C 08 L 69/00** // (C08L69/00, 71:04, 83:04)

(54) **Polymer mixture comprising an aromatic polycarbonate resin and a polyphenylene ether resin.**

(30) Priority: **06.08.84 NL 8402429**

(43) Date of publication of application:
**19.02.86 Bulletin 86/08**

(45) Publication of the grant of the patent:
**28.12.88 Bulletin 88/52**

(84) Designated Contracting States:
**DE FR GB IT NL**

(56) References cited:
**EP-A-0 019 127**
**EP-A-0 090 922**
**FR-A-2 282 450**
**US-A-3 162 695**
**US-A-3 933 941**
**US-A-4 393 161**

**The file contains technical information submitted after the application was filed and not included in this specification**

(73) Proprietor: **GENERAL ELECTRIC COMPANY**
**1 River Road**
**Schenectady New York 12305 (US)**

(72) Inventor: **Van Abeelen, Petrus Cornelis A.M.**
**General Electric Plastics B.V. P.O. Box 117**
**NL-4600 AC Bergen op Zoom (NL)**
Inventor: **Van der Meer, Roelof**
**General Electric Plastics B.V. P.O. Box 117**
**NL-4600 AC Bergen op Zoom (NL)**

(74) Representative: **Schüler, Horst, Dr. et al**
**Kaiserstrasse 69**
**D-6000 Frankfurt/Main 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 171 826 B1

**Description**

The invention relates to a polymer mixture comprising a) an aromatic polycarbonate resin and b) a polyphenylene ether resin.

Polymer mixtures which comprise an aromatic polycarbonate resin and a polyphenylene ether resin are known *per se* from US—A—3,221,080. The known mixtures have a good resistance against organic solvents. On closer examination of the known mixtures it was found that the processing should be carried out under accurately controlled conditions. The melt of these mixtures actually shows some instability.

The invention provides new polymer mixtures having an improved stability of the melt and hence an easier processability. The new polymer mixtures according to the invention generally show improved mechanical properties, in particular a better impact strength. Moreover, no or a smaller decay of the aromatic polycarbonate resin generally occurs in the polymer mixtures according to the invention. Such a decay sometimes occurs in the mixtures according to US—A—3,221,080.

The polymer mixture according to the invention is characterized in that the mixture comprises:

a) 75—99 parts by weight of aromatic polycarbonate resin,

b) 1—25 parts by weight of polyphenylene ether resin, and,

c) 0.1—2 parts by weight per 100 parts by weight of (a) plus (b) of a polyhydrogen siloxane.

German Patent Application 29 18883 discloses flame retardant polymer mixtures which comprise an aromatic polycarbonate resin, an organic halogen compound, an alkali salt or alkaline earth salt, an anti-dripping agent and a second thermoplastic resin. According to this prior art, a polytetrafluoroethylene, a polysiloxane or glass fibres may be used as anti-dripping agents. As the second thermoplastic resin the known mixture may comprise an ABS polymerisate, a polyalkylene ester, a polyamide, a polyphenylene ether or a polyolefin.

The polymer mixture according to the invention preferably comprises a poly(methyl hydrogen) siloxane.

EP—A—0090922 describes blends of siloxane modified p-polyphenylene sulfid and polycarbonates. Said blends comprise 30—98% by weight of the polyphenylene sulfid. The siloxane prevents to a great extent the degradation of the polycarbonate.

The polymer mixture according to the invention may comprise in addition an impact strength-improving agent. An example of such an impact strength-improving agent is a styrene-butadiene-styrene block copolymer. These block copolymers may be partially hydrogenated.

Polymer mixtures comprising 4—96 parts by weight of a hydrogenated styrene-butadiene-styrene block copolymer and 96—4 parts by weight of a polycarbonate resin are known from United States Patent Specification 4,088,711. For altering the viscosity, these known mixtures may additionally comprise a polyphenylene ether. The polyphenylene ether is used in a quantity of 0—100 parts by weight per 100 parts by weight of polycarbonate resin.

The polymer mixture according to the invention comprises at least the three following constituents:

a) an aromatic polycarbonate resin,

b) a polyphenylene ether resin, and

c) a polyhydrogen siloxane.

Aromatic polycarbonate resins are compounds known per se. They are generally prepared by reacting a dihydric phenol with a carbonate precursor, for example, phosgene, a halogen formate (haloformate) or a carbonate ester. The dihydric phenols which are used in the preparation of aromatic polycarbonate resins may comprise one or more aromatic nuclei; these phenols comprise at any rate two hydroxyl groups which are bonded directly to a carbon atom of an aromatic nucleus.

Suitable dihydric phenols are:

2,2 - bis(4 - hydroxyphenyl)propane (bisphenol A);
hydroquinone;
2,2 - bis - (4 - hydroxyphenyl)pentane;
2,4' - (dihydroxydiphenyl)methane;
bis - (2 - hydroxyphenyl)methane;
bis - (4 - hydroxyphenyl)methane;
bis - (4 - hydroxy - 5 - nitrophenyl)methane;
1,1 - bis(4 - hydroxyphenyl)ethane;
3,3 - bis(4 - hydroxyphenyl)pentane;
2,2 - dihydroxydiphenyl;
2,6 - dihydroxynaphtalene;
bis - (4 - hydroxydiphenyl)sulphone;
bis - (3,5 - diethyl - 4 - hydroxyphenyl)sulphone;
2,2 - bis(3,5 - dimethyl - 4 - hydroxyphenyl)propane;
2,4' - dihydroxydiphenyl sulphone;
5' - chloro - 2,4' - dihydroxydiphenyl sulphone;
bis - (4 - hydroxyphenyl)diphenyl sulphone;
4,4' - dihydroxydiphenyl ether;

4,4' - dihydroxy - 3,3' - dichlorodiphenyl ether;
4,4' - dihydroxy - 2,5 - dichlorodiphenyl ether;
bis(4 - hydroxy - 5 - propylphenyl)methane;
bis(4 - hydroxy - 2,6 - dimethyl - 3 - methoxyphenyl)methane;
1,1 - bis(4 - hydroxy - 2 - ethylphenyl)ethane;
2,2 - bis(3 - phenyl - 4 - hydroxyphenyl)propane;
bis(4 - hydroxyphenyl)cyclohexylmethane; and
2,2 - bis(4 - hydroxyphenyl) - 1 - phenyl propane.

Further dihydric phenols which are suitable for the preparation of aromatic polycarbonate resins are disclosed in United States Patent Specifications 2,999,835, 3,038,365, 3,334,154 and 4,131,575.

It is possible to use a mixture of two or more different dihydric phenols or a mixture of a dihydric phenol in combination with a glycol, a polyester with terminal hydroxy group, or a dibasic acid. It is also possible to use branched polycarbonate resins, as described, for example, in United States Patent Specification 4,001,184. Mixtures of different polycarbonate resins are also suitable.

A homopolymer derived from 2,2 - bis(4 - hydroxyphenyl)propane (bisphenol A) is preferably used. A homopolymer having an intrinsic viscosity from 40 to 75 ml/g (measured at 25°C in methylene chloride) is preferably used, most preferred is a range of 50—70 ml/g.

Polyphenylene ether resins are compounds known per se. For this purpose, reference may be made to United States Patent Specifications 3,306,874; 3,306,875; 3,257,357 and 3,257,358. Polyphenylene ether resins are used according to the invention prepared by an oxidative coupling reaction—in the presence of a copper amine complex of one or more two-fold or three-fold substituted phenols, in which homopolymers and copolymers, respectively, are obtained. Copper amine complexes derived from primary, secondary and/or tertiary amines are used. Examples of suitable polyphenylene ether resins are:

poly(2,3 - dimethyl - 6 - ethylphenylene - 1,4 - ether);
poly(2,3,6 - trimethylphenylene - 1,4 - ether);
poly(2 - bromo - 6 - phenylphenylene - 1,4 - ether);
poly(2 - methyl - 6 - phenylphenylene - 1,4 - ether);
poly(2 - phenylphenylene - 1,4 - ether);
poly - (2 - chlorophenylene - 1,4 - ether);
poly(2 - methylphenylene - 1,4 - ether);
poly(2 - chloro - 6 - ethylphenylene - 1,4 - ether);
poly(2 - chloro - 6 - bromophenylene - 1,4 - ether);
poly(2,6 - di - n - propylphenylene - 1,4 - ether);
poly(2 - methyl - 6 - isopropylphenylene - 1,4 - ether);
poly(2 - chloro - 6 - methylphenylene - 1,4 - ether);
poly(2 - methyl - 6 - ethylphenylene - 1,4 - ether);
poly(2,6 - dibromophenylene - 1,4 - ether);
poly(2,6 - dichlorophenylene - 1,4 - ether);
poly(2,6 - diethylphenylene - 1,4 - ether) and
poly(2,6 - dimethylphenylene - 1,4 - ether).

Copolymers, for example, copolymers derived from two or more phenols as used in the preparation of the above-mentioned homopolymers, are also suitable. Graft copolymers and block copolymers of vinyl aromatic compounds, for example, polystyrene, and of polyphenylene ether as described above, are furthermore suitable.

Polyhydrogen siloxane. As a polyhydrogen siloxane a compound is used comprising units of the formula

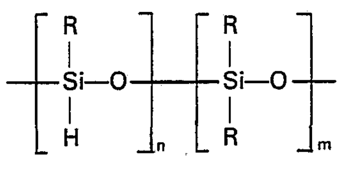

in which R represents a $C_{1-10}$ alkylgroup, a phenylgroup or a mixture thereof, m plus n is at least 4, and usually below 200, n is at least 1 and m may be 0 and in which n:m is at least 0.1. Particularly suitable are the polyhydrogen siloxanes as described in United States Patent Specification 3,971,756 incorporated by reference. A method of preparing these polysiloxane compounds is described in United States Patent Specifications 2,445,794; 2,448,756; 2,484,595 and 3,514,424. Poly(methylhydrogen) siloxane as it is marketed by General Electric, U.S.A. under the type indication DF 1040 is preferably used.

In addition to the above-mentioned constituents, the polymer mixture according to the invention may comprise an impact strength-improving agent and/or a styrene homopolymer or copolymer.

As impact strength-improving agents are to be considered any agent known per se for that purpose for

polyphenylene ether resins and for polycarbonate resins. In particular may be mentioned vinylaromatic diene block copolymers, for example, styrene-butadiene block copolymers. These block copolymers may be so-called diblock copolymers or triblock copolymers. Furthermore may be mentioned graft copolymers consisting of a polyacrylate or polydiene on which acryl compounds and/or vinylaromatic compounds are grafted. Particularly suitable are the so-called core-shell graft copolymers consisting of a polyacrylate or polybutadiene nucleus on which a methacrylate or methacrylic acid and/or styrene has been grafted.

Impact strength-improving agents are used in the polymer mixture according to the invention in a quantity of 0—25 parts by weight per 100 parts by weight of aromatic polycarbonate resin plus polyphenylene ether resin.

The polymer mixtures according to the invention may further comprise a styrene homopolymer or copolymer resin. Examples of such resins are polystyrene, styrene-acrylonitrile copolymer (SAN), styrene-butadiene copolymers, styrene-acrylonitrile-butadiene copolymers (ABS) and styrene-maleic acid anhydride copolymers. As styrene polymers may also be used high impact polystyrene, i.e. polystyrene which is mixed and/or grafted with natural or synthetic elastomers, for example, polybutadiene, styrene-butadiene copolymers or EPDM-rubber. Polymer blends comprising a polyphenylene ether, an aromatic polycarbonate and a styrene resin such as high impact polystyrene are known from US 3,933,941. Said known blends don't comprise a polyhydrogen siloxane.

The polymer mixture according to the invention may comprise in addition any additive known for polymer mixtures on the basis of aromatic polycarbonate resins or on the basis of polyphenylene ether resins. Examples are flame retarding agents, dyes, pigments, mould detaching agents, agents to make polymer mixtures antistatic or electrically conductive, fillers, for example, glass fibres and carbon fibres, and stabilizers, for example, organic phosphite compounds.

The invention will be described in greater detail with reference to the ensuing specific examples:

Examples I through III
Comparative Example A

Four polymer mixtures were prepared as indicated in Table A hereinafter. A pre-dried polycarbonate resin derived from bisphenol A with an intrinsic viscosity of 51 ml/g measured in methylene chloride at 25°C was used as an aromatic polycarbonate resin. A pre-dried poly(2,6 - dimethylphenylene ether) having an intrinsic viscosity of 49 ml/g measured in chloroform at 25°C was used as a polyphenylene ether resin. The polyhydrogen siloxane used was a poly(methyl hydrogen) siloxane of General Electric, type DF 1040, having a kinematic viscosity of 35—45 $m^2$ per second (centistokes) measured at 25°C. All the polymer mixtures comprise 0.1 part by weight of organic phosphite as a stabilizer.

The polymer mixtures were prepared by mixing the various constituents in the indicated quantities in a Papenmeier mixer in the dry condition. The resulting mixtures were extruded on a Leistriz 30 mm single blade extruder under reduced pressure at an average temperature at 268°C, at 80 r.p.m., and reduced to grains.

Test plates were made from the resulting grains by injection moulding. Test bars according to ASTM 256 were injection moulded (1/8 inch, i.e. approximately 3 mm) to determine the Izod notch impact value.

The melt instability of the resulting grains was determined by means of a high-pressure capillary rheometer (Rheograph 2000). The melt instability is defined as

$$\text{Melt instability} = \frac{MV_{7'} - MV_{40'}}{MV_{7'}} \times 100\%$$

wherein $MV_{7'}$ and $MV_{40'}$, respectively, indicate the melt viscosity after 7 minutes and after 40 minutes, respectively (temperature polymer mixture=300°C, shear velocity=1500 per second).

The values found for the Izod notch impact strength and for the melt instability are also recorded in Table A hereinafter.

By comparing the Examples I, II and III with Comparative Example A it may be seen that the addition of 0.3 to 0.8 parts of DF 1040 to a mixture of 90 parts of aromatic polycarbonate resin and 10 parts by weight of polyphenylene ether resin results in a better notch impact value and a lower melt instability.

TABLE A

| Composition (parts by weight) | A | Example I | II | III |
|---|---|---|---|---|
| Aromatic polycarbonate resin | 90 | 90 | 90 | 90 |
| Polyphenylene ether | 10 | 10 | 10 | 10 |
| Poly(methyl hydrogen siloxane) | — | 0.3 | 0.5 | 0.8 |
| Properties | | | | |
| Izod notch impact value (at 23°C; J/m) | 71 | 76 | 82 | 91 |
| Melt instability (%) | 20 | 15.5 | 15.3 | 15.3 |

Example IV

This example demonstrates that the addition of an impact strength-improving agent to the composition according to Example I results in a further improvement of the notch impact value, while the favourable effect of the DF 1040 on the melt instability is maintained.

In this example, starting from the constituents according to Example I and from a hydrogenated styrene-butadiene-styrene block copolymer (Kraton G 1651 of Shell), a polymer mixture was prepared comprising 87 parts by weight of aromatic polycarbonate resin, 10 parts by weight of polyphenylene ether resin, 0.3 parts by weight of poly(methyl hydrogen) siloxane, and 3 parts by weight of Kraton®G 1651. The method of preparing the polymer mixture, the grains manufactured therefrom and test bars injection-moulded therefrom was the same as in Example I.

The polymer mixture according to Example IV had the following properties: Izod notch impact value (at 23°C) 134 J/m; melt instability 18.1%.

**Claims**

1. A polymer mixture comprising a) an aromatic polycarbonate resin and b) a polyphenylene ether resin, the mixture comprising:
a) 75—99 parts by weight of aromatic polycarbonate resin,
b) 1—25 parts by weight of polyphenylene ether resin prepared in the presence of copper amine complexes derived from primary, secondary and/or tertiary amines, and
c) 0.1—2 parts by weight per 100 parts by weight of (a) plus (b) of a polyhydrogen siloxane.

2. A polymer mixture as claimed in Claim 1, characterized in that per 100 parts by weight of aromatic polycarbonate resin (a) plus polyphenylene ether resin (b) the polymer mixture comprises 0—25 parts by weight of an impact strength-improving agent (d).

3. A polymer mixture as claimed in Claim 2, characterized in that the polymer mixture comprises a partially hydrogenated or non-hydrogenated styrene-butadiene diblock copolymer or styrene-butadiene-styrene triblock copolymer as an impact strength-improving agent (d).

4. A polymer mixture as claimed in Claim 2, characterized in that the polymer mixture comprises as an impact strength-improving agent (d) a graft copolymer built up from a polyacrylate or polybutadiene nucleus on which a methacrylate or methacrylic acid and/or styrene is grafted.

5. A polymer mixture as claimed in Claim 1, characterized in that the polymer mixture comprises a styrene homopolymer or copolymer (e) in a quantity of from 1 to 100 parts by weight per 100 parts by weight of polyphenylene ether resin.

6. A polymer mixture as claimed in Claim 5, characterized in that the polymer mixture comprises a high impact polystyrene (e).

7. A polymer mixture as claimed in Claim 1, characterized in that the aromatic polycarbonate resin has an intrinsic viscosity of 40—75 ml/g (measured in methylene chloride at 25°C).

**Patentansprüche**

1. Polymermischung enthaltend
(a) ein aromatisches Polycarbonatharz und
(b) ein Polyphenylenätherharz, wobei die Mischung umfaßt:
(a) 75 bis 99 Gew.-Teile des aromatischen Polycarbonatharzes,
(b) 1 bis 25 Gew.-Teile des Polyphenylenähhterharzes, hergestellt in Anwesenheit des Kupfer-Amin-Komplexes, abgeleitet von primären, sekundären und/oder tertiären Aminen und
(c) 0,1 bis 2 Gew.-Teilen eines Polyhydrogensiloxans pro 100 Gew.-Teile von (a)+(b).

2. Polymermischung nach Anspruch 1, dadurch gekennzeichnet, daß pro 100 Gew.-Teile des

aromatischen Polycarbonatharzes (a)+Polyphenylenätherharz (b) die Polymermischung 0 bis 25 Gew.-Teile eines die Schlagfestigkeit verbessernden Mittels (d) enthält.

3. Polymermischung nach Anspruch 2, dadurch gekennzeichnet, daß die Polymermischung ein teilweise hydriertes oder nicht hydriertes Styrol-Butadien-Diblockcopolymer oder Styrol-Butadien-Styrol-Triblockcopolymer als ein die Schlagfestigkeit verbesserndes Mittel (d) enthält.

4. Polymermischung nach Anspruch 2, dadurch gekennzeichnet, daß die Polymermischung als ein die Schlagfestigkeit verbesserndes Mittel (d) ein Pfropfcopolymer enthält, welches aus einem Polyacrylat- oder Polybutadienkern aufgebaut ist, auf welchen ein Methacrylat oder Methacrylsäure und/oder Styrol aufgepfropft ist.

5. Polymermischung nach Anspruch 1, dadurch gekennzeichnet, daß die Polymermischung ein Styrolhomopolymer oder -copolymer (e) in einer Menge von 1 bis 100 Gew.-Teilen pro 100 Gew.-Teile des Polyphenylenätherharzes enthält.

6. Polymermischung nach Anspruch 5, dadurch gekennzeichnet, daß die Polymermischung ein hochschlagfestes Polystyrol (e) enthält.

7. Polymermischung nach Anspruch 1, dadurch gekennzeichnet, daß das aromatische Polycarbonatharz eine grundmolare Viskositätszahl von 40 bis 75 ml/g (gemessen in Methylenchlorid bei 25°C) aufweist.

**Revendications**

1. Un mélange de polymères comprenant (a) une résine de polycarbonate aromatique et (b) une résine de poly(éther de phénylène), le mélange comprenant:

a) 75 à 99 parties en poids de résine de polycarbonate aromatique,

b) 1 à 25 parties en poids de résine de poly(éther de phénylène) préparée en présence de complexes de cuivre et d'amine dérivés d'amines primaires, secondaires et/ou tertiaires, et

c) 0,1 à 2 parties en poids pour 100 parties en poids de la somme de (a) et (b) d'un polyhydrogénosiloxane.

2. Mélange de polymères selon la revendication 1, caractérisé en ce que pour 100 parties en poids de la somme de la résine de polycarbonate aromatique (a) et de la résine de poly(éther de phénylène) (b), le mélange de polymères comprend 0 à 25 parties en poids d'un agent (d) améliorant la résistance au choc.

3. Mélange de polymères selon la revendication 2, ce mélange de polymères étant caractérisé en ce qu'il comprend un copolymère diséquencé de styrène-butadiène ou un copolymère triséquencé de styrène-butadiène-styrène partiellement hydrogénés ou non hydrogénés comme agent (d) améliorant la résistance au choc.

4. Mélange de polymères selon la revendication 2, ce mélange de polymères étant caractérisé en ce qu'il comprend, comme agent (d) améliorant la résistance au choc, un copolymère greffé constitué d'un noyau de polyacrylate ou de polybutadiène sur lequel est greffé un méthacrylate ou l'acide méthacrylique et/ou du styrène.

5. Mélange de polymères selon la revendication 1, ce mélange de polymères étant caractérisé en ce qu'il comprend un homopolymère ou copolymère de styrène (e) en une quantité de 1 à 100 parties en poids pour 100 parties en poids de la résine de poly(éther de phénylène).

6. Mélange de polymères selon la revendication 5, ce mélange de polymères étant caractérisé en ce qu'il comprend un polystyrène choc (e).

7. Mélange de polymères selon la revendication 1, caractérisé en ce que la résine de polycarbonate aromatique a une viscosité intrinsèque de 40 à 75 ml/g (mesurée dans le chlorure de méthylène à 25°C).